# EUROPEAN PATENT APPLICATION

(11) **EP 3 378 335 A1**
(43) Date of publication of application: **26.09.2018**
(21) Application number: 17211033.0
(22) Date of filing: 29.12.2017
(51) Int. Cl.: A23L 33/105, A23L 33/155

(54) **NUTRACEUTICAL COMPOUND FOR THE TREATMENT OF EXCESS OF WEIGHT AND MODERATE HYPERCHOLESTEROLEMIA AND DYSGLYCEMIA**

(30) Priority: 24.03.2017 IT 201700032960
(71) Applicant: Akademy Pharma S.r.l., 20135 Milano (IT)
(72) Inventor: MAGLIONE, Vincenzo, I - 20900 MONZA (Monza Brianza) (IT)
(74) Representative: Lunati & Mazzoni S.r.L.

(57) **Abstract**

A nutraceutical compound for the treatment of excess of weight and the moderate hypercholesterolemia and disglicemia is provided, which comprises 1-deoxynojirimycin, Berberine, Hydroxycitric Acid and Vitamin D3.

## Description

The present invention relates to a nutraceutical compound for the treatment of excess of weight and the moderate hypercholesterolemia and disglicemia of the type specified in the preamble of the first claim.

In particular, the invention relates to a nutraceutical compound capable of reducing the body weight and which can be used as a support treatment for a low-calorie diet. In addition, the compound contains components capable of lowering cholesterolaemia in patients with moderate excess of blood cholesterol and reducing blood glucose and insulin resistance in subjects/patients with high blood glucose levels.

According to the World Health Organization (WHO), overweight and especially obesity are among the major public health concerns in the world. Indeed, a real global epidemic is under way, which is spreading in many countries and could cause, in the absence of immediate action, very serious health problems in the coming years.

Still according to the World Health Organization (WHO), diabetes is a chronic, metabolic disease characterised by high levels of glucose or sugar in the blood, which leads in time to serious damage to the heart, blood vessels, eyes, kidneys and nerves.

The most common is type 2 diabetes, with typical onset in adulthood, which occurs when the body becomes resistant to insulin or does not produce enough insulin. Over the past three decades, the prevalence of type 2 diabetes has dramatically increased globally.

Type 1 diabetes, once known as juvenile diabetes or insulin-dependent diabetes, is a chronic condition in which the pancreas produces little or no insulin.

For people suffering from diabetes, access to affordable care, including insulin, is essential for their survival.

In this sense, the goal of halting the increase in diabetes and obesity by 2025 has been agreed globally. The mission of the WHO Diabetes Programme is to prevent diabetes whenever possible and, where not possible, to minimize complications and maximize the quality of life.

Obesity, overweight and diabetes are conditions that are often associated with premature death and now universally recognized as risk factors for major chronic diseases: cardiovascular disease, stroke, diabetes, a few cancers (endometrial, colorectal, renal, gallbladder and breast cancers in postmenopausal women), gallbladder disease, osteoarthritis.

In addition, very often, overweight patients also have an excess of fat in the blood. Among these, the most feared is the increase in cholesterolaemia, which is associated with increased vascular risk. Hypercholesterolaemia is currently treated with drugs such as statins, which are very effective but at the usual dosages may be associated, at least in one case out of four, with muscular, hepatic or other side effects.

Recent studies have also shown that statins may often even increase the incidence of diabetes in elderly patients.

Another important problem of increasing importance in the Western world and beyond is the high likelihood of development of diabetes in a person with a high body weight.

Lastly, over time, the onset of obesity among children and adolescents, which since childhood exposes children to respiratory distress, joint problems, reduced mobility, but also to physical, in relation to the digestive tract, as well as psychological disturbances, is becoming increasingly important.

Among the best known techniques to promote weight loss are drugs known as "diet pills" made with caffeine, ephedrine or amphetamines, which increase the body's metabolism and consequently increase calorie consumption.

These drugs, despite having important advantages, have major contraindications. The use of amphetamines may give rise to numerous disturbances such as, for example, body dehydration, gastrointestinal disorders, headache, hypertension, arrhythmias, angina pectoris, myocardial infarction and increased stroke risk. Moreover, the use of these pills tends to make the body develop a sort of resistance to slimming effects, thus requiring increased dosage which, as already expressed, involves consequent risks.

Amphetamines, in fact, are now banned in most Western countries.

Sibutramine® is known among the most effective anti-obesity drugs, acting on the central nervous system by using a mechanism of action similar to that of some antidepressant drugs.

Sibutramine®, although giving positive results, has important side effects which have led to its withdrawal from the market.

Lastly, Orlistat®, still on the market, acts by reducing the absorption of dietary fats through inhibition of gastrointestinal lipases, i.e. those enzymes which break down triglycerides into simpler fragments easily absorbable by the intestinal mucosa (fatty acids and monoglycerides).

However, even Orlistat® has major drawbacks.

In fact, triglycerides that have escaped the digestive process cause the classic disorders associated with steatorrhea and, in some cases, the onset of flatulence, incontinence, oily stools and faecal urgency.

As a conclusion of all these considerations, at present only Orlistat® is commercially available in Europe for the treatment of excess weight.

While as regards the treatment of hypercholesterolaemia, as indicated above, statins may have significant side effects and, following chronic treatment administered to overweight subjects, may also lead to an increase in the risks associated with the onset of diabetes.

Other products for treating hypercholesterolaemia are ion exchange resins, difficult to administer and with poor compliance to treatment, and the so-called fibrates, however mainly indicated for the treatment of hypertriglyceridaemia.

Recently Ezetimibe has been introduced on the market, i.e. a drug mainly acting at the intestinal level by reducing the absorption of cholesterol with a lower efficacy than statins.

In addition, products of considerable interest have recently been introduced on the market, such as the PCSK9-antagonist monoclonal antibodies.

However, they have the drawback of being drugs with particular therapeutic indications whose availability is very limited due to the very high cost.

Lastly, Lomitapide is a synthetic product active in the most severe forms of hypercholesterolaemia (homozygous hypercholesterolaemia) with a very high cost and therefore restricted to a limited number of patients.

Other compounds are known from patent documents EP 3025593 A1, by the same applicant, and EP 3117825 A1. However, the described compounds include Monacolin K to which some subjects are intolerant (an estimated 6%).

Other compounds are known from patent documents EP 1608235 B1 and US 2017/037043 A1. However, their effectiveness is highly reduced.

In this context, the technical task underlying the present invention is to devise a nutraceutical compound for the treatment of excess of weight and the moderate hypercholesterolemia and disglicemia which is capable of substantially obviating at least some of the above-mentioned drawbacks.

Within the scope of said technical task, a major object of the invention is to obtain a nutraceutical compound that does not substantially have contraindications and, therefore, is virtually usable by anyone.

The technical task and the specified objects are achieved by a nutraceutical compound for the treatment of excess of weight and the moderate hypercholesterolemia and disglicemia as claimed in the appended claim 1. Preferred embodiments are described in the dependent claims.

The features and advantages of the invention will be apparent from the detailed description of preferred embodiments of the invention, with reference to the accompanying drawings, in which:

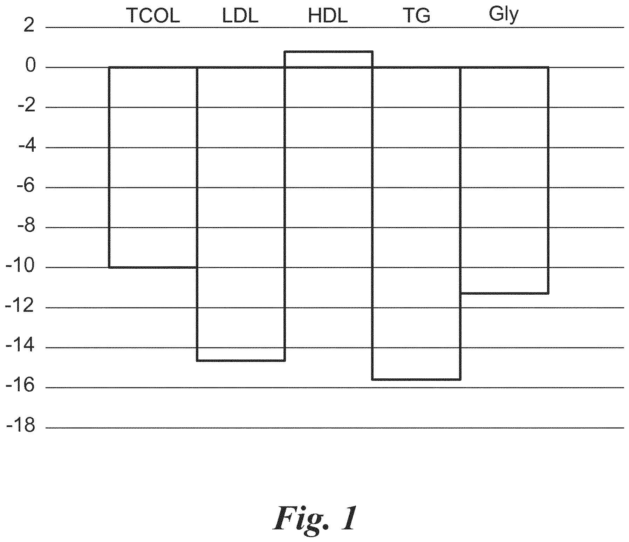

**Fig. 1** shows results related to the nutraceutical compound for the treatment of excess weight and moderate hypercholesterolaemia and dysglycaemia.

In the present document, the measures, values, shapes and geometric references (such as perpendicularity and parallelism), when associated with terms like "about" or other similar terms such as "almost" or "substantially", are to be understood as unless measurement errors or inaccuracies due to production and/or manufacturing defects and, especially, unless a slight difference from the value, measure, shape, or geometric reference with which it is associated. For example, these terms, if associated with a value, preferably indicate a difference not exceeding 10% of the value itself.

Furthermore, when used, terms such as "first", "second", "higher", "lower", "main" and "secondary" do not necessarily identify an order, a priority relationship or a relative position, but can simply be used to distinguish more clearly the different components from each other.

The measurements and the data reported in this text are to be considered, unless otherwise indicated, as carried out in the International Standard Atmosphere ICAO (ISO 2533).

In particular, the invention relates to a nutraceutical composition or functional food or food-drug, which is adapted to be used for the manufacture of tablets, sachets, powders that can be diluted in a solvent such as, for example, water.

The nutraceutical compound according to the invention comprises a first active component.

This first active component is able to regulate the absorption of carbohydrates, resulting in reduced absorption of substances capable of lowering the energy content of foods.

In particular, it allows the transformation of sugars (polysaccharides) into glucose to be significantly reduced and, consequently, the absorption of sugar by the blood to be slowed down.

The first active component preferably comprises a principle defined by 1-deoxynojirimycin.

1-Deoxynojirimycin, also designated as DNJ, is preferably naturally dry-extracted preferably from blackberries, silkworms or white mulberries (Morus alba). More particularly, DNJ occurs inside the nutraceutical component as a dry extract of Morus alba leaves, obtained according to customary drying processes known to those skilled in the art, and in particular starting from white mulberry leaves harvested during the balsamic period to ensure the maximum content of phytoactives, and using ethanol and water as extraction solvents.

The first active component is preferably present, in a recommended portion, at doses ranging from 100 mg/day to 1000 mg/day, and preferably from 400 mg/day to 700 mg/day.

In order to allow the correct intake, for example, the nutraceutical compound consists of tablets and/or sachets, which are adapted to be taken once a day.

Preferably, the first component is present, in a recommended portion, at doses which are substantially equivalent to 500 mg/day Morus alba leaf dry extract titrated to 2% in DNJ or 1,000 mg/day Morus alba leaf dry extract titrated to 1% in DNJ i.e. 10 mg of DNJ.

The second active component is preferably constituted by Berberine.

Berberine is preferably obtained from Berberis aristata bark dry extract. Preferably, the extraction takes place through an aqueous solution.

Berberine is a plant alkaloid with a bitter taste and an intense yellow colour, which occurs in the bark, roots and stems of plants belonging to the genus Berberis.

Used for centuries in traditional Chinese medicine, it can be deadly if taken in excessive doses, but on the contrary it is very effective if introduced into the body correctly.

In detail, the second component is preferably a Berberis aristata bark extract titrated to 85% in Berberine. This is a widely used compound capable of regulating both cholesterol levels and, to a lesser extent, blood sugar levels. It is a quaternary ammonium salt belonging to the group of benzyl-quinoline alkaloids. It is found in particular in Berberis aristata plants, usually in the root, stem and bark. Berberine has a dual mechanism of action. On the one hand, it exerts a hypoglycaemic/antidiabetic activity through insulin sensitizing by activating the enzyme AMPK (similar to the mechanism of metformin) resulting in reduced glucose absorption and potential weight loss. The second mechanism is instead related to the activation of hepatic receptors for LDL lipoproteins.

This is a mechanism exerted by very few molecules, none of which on the market, and allows a synergistic activity with statins.

Berberine exhibits low absorption, which requires relatively high dosages. Currently, the dosage generally used in clinical therapy is approximately 300 mg, daily or twice a day, which enables an optimal activity thereof on cholesterolaemia, glycaemia, as well as on body weight.

Preferably, Berberine is present in the compound in quantities comprised between 50-60 times the quantity of DNJ.

More in detail, the second component is preferably present, in a recommended portion, at doses equal to 625 mg in Berberis aristata corresponding to 531 mg of Berberine.

The third active component preferably comprises Garcinia Cambogia. Garcinia Cambogia is a sub-tropical plant native to Indonesia, particularly the Garcinia region, from which it takes its name.

The plant produces green-skinned fruit. Garcinia Cambogia is also known as Malabar tamarind.

In particular, Garcinia Cambogia fruits are used in India and Indonesia in traditional nutrition, but the fame of this plant in the West is linked to its hypothetical ability to promote weight loss.

The most used part of Garcinia Cambogia is its fruit peel. The hydroxycitric acid (HCA) contained in Garcinia Cambogia fruit peel promotes our body's fat metabolism.

Preferably, hydroxycitric acid is present in the compound in quantities comprised between 25-35 times the quantity of DNJ.

In particular, the third component is preferably present, in a recommended portion, at doses comprised between 300 mg/day and 900 mg/day, i.e. at least 500 mg/day with 300 mg/day of hydroxycitric acid (HCA), which enables an optimal activity thereof on both cholesterolaemia and glycaemia.

The nutraceutical compound preferably comprises a fourth active component consisting essentially of Vitamin D3.

Vitamin D3 is a liposoluble vitamin essential for our body, which has countless functions and is considered ideal to supplement the diet so that our body has the right amount thereof in order to perform the physiological functions.

Preferably, Vitamin D3 is present in the compound in quantities comprised between 0.1% and 0.4% the quantity of DNJ.

In detail, the fourth component is preferably present, in a recommended portion, in dosages equal to 25 µg with a daily intake of 1,000 International Units (IU).

To demonstrate the effectiveness of the nutraceutical compound comprising the above described active components, i.e. DNJ, Berberine (B), hydroxycitric acid (HCA) and Vitamin D3 (VD), some of the experiments carried out by the applicant are reported.

In detail, two experiments performed on CD-1 mice (see the monograph on FRONTIERS IN NEUROENDOCRINOLOGY, IF 2006 Nov. 4) and ob/ob mice (strain of mice homozygous for defects in the "obese" gene) divided in cages, are described.

More specifically, each cage is kept at a room temperature of 24±2°C with a 12-h light/dark cycle and contains four animals belonging to one of the two types and distributed so as to have substantially equivalent body weights in the different cages. Each group of mice was subjected for six weeks to a particular diet. In particular, CD-1 mice were divided into four groups fed on, respectively:
- DN: normal diet, i.e. not enriched with fat;
- HFD: high-fat diet consisting of: 15 g normal rodent pellets, 10 g roasted hazelnuts, 10 g milk chocolate and 0.5 g corn biscuits;
- HFD+ 30 mg/L DNJ, 20 mg/L HCA/B/VD dissolved in drinking water (low dose);
- HFD+ 90 mg/L DNJ, 60 mg/L HCA/B/VD dissolved in drinking water (high dose);

The ob/ob mice were instead divided into three groups fed on:
- DN: normal diet plus gavage with water;
- HFD: high-fat diet as indicated above;
- HFD: gavage with 30 mg/kg DNJ, 20 mg/kg HCA/B/VD (low dose);
- HFD and gavage with 90 mg/kg DNJ, 60 mg/kg HCA/B/VD (high dose).

Once the test period (6 weeks) was completed, the liver, abdominal (epididymal + parametrial) fat and cardiac blood samples were collected from CD-1 mice and analysed. Plasma and serum were in turn collected from the blood.

In particular, tables 1 and 2 below show the results obtained with the CD-1 mice.

The analysis of CD-1 mice subjected to HFD+DNJ+ HCA/B/VD at low doses and high doses reported a lower weight, by 26% and 33% respectively, compared to those treated with HFD only, as shown in Table 1. In particular, comparing the various nutraceutical combinations vs HFD alone, the abdominal fat with DNJ+ HCA/B/VD at low dose was found to be significantly below that seen with HFD alone, and the figure further improved at the higher dose of the nutraceutical mixture. With the high dose, the abdominal fat was less than twice that of the DN group. In addition, the liver weight, significantly increased with HFD, fell to values not far from the norm in particular at the higher dose of the three products. Lastly, the liver enzyme data showed no particular changes as a result of treatments with the two doses of nutraceutical product.

**Table 1: analysis of biological variables in CD-1 mice (mean ± SD)**

| **CD-1 mice** | **DN** | **HFD** | **HFD+ DNJ+ HCA/B/VD** | **HFD+ DNJ+ HCA/B/VD** |
|---|---|---|---|---|
| | | | **low dose** | **high dose** |
| Initial weight [g] | 24.9±2.2 | 23.9±3.7 | 24.9±3.8 | 24.2±2.9 |
| Final weight [g] | 37.5±3.1 | 49.5±5.1° | 45.3±1.9°* | 42.7±3.6°** |
| food/week | 32.9±4.4 | 31.5±3.7° | 28.7±3.2* | 27.1±4.0** |
| water | 41.7±3.2 | 44.2±2.8 | 37.5±3.9 | 38.0±3.6 |
| Abdominal fat mg/10 g weiqht | 250.3±38.6 | 652.7±89.8°° | 537.1±76.3°* | 492.3±94.0°* * |
| Hepatic weight (mg/10 g body weight) | 290.7±22.5 | 451.6±60.2° | 376.8±56.3°* | 329.7±31.8°* * |
| ALT U/L | 39.3±7.7 | 44.1±8.3 | 45.3±7.6 | 43.9±6.5 |
| AST U/L | 88.5±6.6 | 96.2±8.3 | 102.3±6.7 | 104.5±8.9 |
| Alkaline phosphatase U/L | 90.3±14.1 | 100±14.8 | 98.3±17.6 | 101.5±16.4 |

| | | | | |
|---|---|---|---|---|
| °< p 0.001 vs DN; * p < 0.001 vs HFD and ** p < 0.0001 | | | | |

**Table 2: effects on plasma lipids, insulin, leptin and intestinal enzymes**

| **CD-1 mice** | **DN** | **HFD** | **HFD + DNJ+ HCA/B/VD** | **HFD** + **DNJ+ HCA/B/VD** |
|---|---|---|---|---|
| | | | **low dose** | **high dose** |
| Cholesterol mg/dL | 88.1±4.8 | 215.4±11.3° | 166.7±12.2°°* | 144.3±11.5°°** |
| TG mg/dL | 112.3±6.6 | 254.1±18.4°° | 200.3±16.5°* | 186.4±14.6°** |
| Glycaemia mg/dL | 84.0±6.5 | 134.2±7.8° | 106.4±9.2°* | 98.3±6.5** |
| Insulin pg/mL | 38.4±9.1 | 95.3+6.8° | 74.2±8.3° | 59.3±7.9°** |
| Leptin ng/mL | 0.8±0.3 | 3.7±0.9* | 4.0±1.3°*⁺ | 4.1±1.1° |
| Lipase U/L | 270.3±39.7 | 299.0±20.3° | 285.3±37.5 | 282.4±40.8* |

| | | | | |
|---|---|---|---|---|
| ° p < 0.01 vs DN; p* < 0.01 vs HFD; **p < 0.001 vs HFD | | | | |

Instead, from Table 2, which shows the biochemical-metabolic data, an important hypocholesterolaemic activity of the nutraceutical emerges, both at the higher dose and at the lower dose. Triglyceridaemia is reduced to a lesser extent, while glycaemia drops significantly, approaching the values obtained with DN at the higher dose. There are no particular alterations of leptin, increased with HFD, while the value of circulating lipase remains just beyond the norm.

Examination of the lipidaemic parameters thus revealed that cholesterolaemia, triglyceridaemia and glycaemia in CD-1 mice dropped very markedly with the nutraceutical treatment (DNJ+ HCA/B/VD).

Instead, insulinaemia, i.e. the amount of insulin in the blood, showed a marked increase with HFD and was significantly reduced with the use of nutraceuticals. Lastly, leptin increased dramatically with HFD and the variations with the nutraceutical were of little significance.

Upon completion of the analysis of the CD-1 mice, the ob/ob mice were analysed, the results of which are shown in tables 3 and 4.

The analysis of the data obtained in the ob/ob mice, as can be seen in Table 3, revealed a further increase in weight with HFD. This was reduced with the lower dose of nutraceutical and brought almost to normal with the higher dose.

A reduction in the weekly food intake of about 10% was observed with the higher doses of the product in the presence of HFD. Instead, no changes were detected in the water intake, while a modest reduction in the epididymal fat and a non-significant reduction in the abdominal fat occurred at the higher doses of the nutraceutical in the presence of HFD. Moreover, no particular alterations of hepatic weight or enzymes were observed.

**Table 3: analysis of the biological data in ob/ob mice**

| **ob/ob mice** | **DN** | **HFD** | **HFD+ DNJ+ HCA/B/VD** | **HFD+D** NJ+ |
|---|---|---|---|---|
| | | | **low dose** | **high dose** |
| Initial weight [g] | 42.2±2. | 40.9±3.3 | 43.0±1.7 | 42.5±3. |
| Final weight [g] | 50.2±4. | 56.7±5.9° | 54.5±3.9° | 52.1±4. |
| Net food intake/final week | 47.2±5. | 44.5±6.1° | 43.8±5.6° | 42.9±4. |
| Net water intake ml/week | 38.4±5. | 40.3±6.7 | 41.1±5.4 | 39.6±7. |
| Epididymal fat mg/10 g weight | 252±6.7 | 294.2±10. | 277.3±9.6° | 264.3±7 |
| Abdominal fat [g] | 8.6±6.4 | 10.7±5.1 | 9.5±6.4 | 8.9±7.3 |
| Hepatic weight (mg/10 g body weight) | 996±77 | 1040±88 | 977±59 | 969±86 |
| ALT U/L | 42.3±5. | 44.7±3.9 | 45.3±4.7 | 45.9±3. |
| AST | 66.4±4. | 67.2±5.4 | 66.9±4.7 | 68.3±5. |
| ALP | 106.3±1 | 110.1±7.8 | 108.5±2.6 | 113.4±1 |

| | | | | |
|---|---|---|---|---|
| ° p < 0.01 vs DN; * p < 0.01 vs HFD; **p < 0.001 vs HFD | | | | |

**Table 4: Effect of the nutraceutical on plasma lipids, glycaemia and insulinaemia in ob/ob mice (X±SD)**

| **ob/ob mice** | **Normal diet** | **HFD** | **HFD+DNJ+ HCA/B/VD** | **HFD+DNJ+ HCA/B/VD** |
|---|---|---|---|---|
| | | | **low dose** | **high dose** |
| Total cholesterol | 145.7+8.3 | 181.9±7.7° | 164.3±5.9 | 151.2±3.7** |
| TG mg/dL | 120.4±6.3 | 172.1±8.3° | 161.4+5.2° | 144.2±6.1°** |
| Glycaemia mg/dL | 188.3±11.4 | 206.2±10.9° | 184.2±12.9°* | 175.0±9.4°** |
| Insulin ng/mL | 78.2±6.5 | 88.4±5.9 | 83.2±4.3* | 79.3±2.2 |

| | | | | |
|---|---|---|---|---|
| *p < 0.01 vs HFD and DN; **p < 0.001 vs HFD, ⁺p < 0.01 vs low dose | | | | |

Table 4 shows instead that cholesterolaemia rose markedly in the presence of HFD and decreased slightly with the low dose of nutraceutical and significantly with the higher dose. The latter brought cholesterolaemia back to values within the norm. Triglycerides instead changed to a lesser extent with both HFD and the nutraceutical at the two doses. The higher dose brought back triglyceride values close to normal. HFD treatment significantly increased the body weight, brought back close to normal with the higher doses of the nutraceutical. The glycaemia case is similar, rising slightly with HFD and brought back to normal values at the higher doses of the nutraceutical. Insulinaemia has a similar behaviour.

Lastly, the effect of the nutraceutical compound on glucose uptake and potentially on carbohydrate tolerance was assessed. In fact, it seemed appropriate to assess whether the nutraceutical compound could exert a modulating activity on glucose metabolism both through the mechanism already described of stimulating insulin expression and hepatic metabolism, and by directly hampering glucose absorption. Wistar rats weighing about 200 g were placed in individual metabolic cages under the temperature and light/dark conditions described above for mice. The animals were divided into two groups:
- untreated animals on the normal diet + sterile saline by gavage,
- animals treated with the nutraceutical mixture by daily gavage (30 mg/kg DNJ, 90 mg/kg P).

The nutraceutical mixture was dissolved in about 4 ml of sterile saline and administered to 10 rats in the experimental group vs 4 ml of sterile saline only in the control rats.

The nutraceutical product or sterile saline was administered daily for a period of two weeks. After two weeks, the animals fasted for 12 hours received glucose (1 g/kg body weight) dissolved in water administered by gavage. Glucose concentrations were determined from the tail vein with ACCU-CHECK at 0, 30, 60, 90 and 120 min. Table 5 shows the results of glycemic changes in control animals and in animals treated with the nutraceutical mixture as well as the area under the curve determined by the trapezoidal method.

It is evident that in the untreated rats there is a rise in blood sugar from normal values to values around + 40% versus time 0. Pre-treatment with the nutraceutical product almost totally prevents the glycaemic rise.

**Table 5: blood glucose levels in the two experimental groups (mg/dL) (X±SD)**

| **Ranges** | **0** | **30'** | **60'** | **90'** | **120'** |
|---|---|---|---|---|---|
| **Controls n = 10** | 73±6 | 120±12 | 115±7 | 100±5 | 78±3 |
| **DNJ+B+RR n** | 74±5 | 84±6** | 82±4* | 79±3* | 76±5 |
| **AUC_{t0-∞}** | | | | | |
| **Controls n = 10** | 207.8+11.3 | | | | |
| **DNJ+B-RR n =10** | 153.1+8.4 | | | | |

| | | | | | |
|---|---|---|---|---|---|
| *p < 0.01; **p<0.001 vs controls | | | | | |

The invention described provides significant advantages.

The advantageous combination of the three-nutraceutical elements allows for obtaining very favourable results both on body weight and lipidaemic parameters. In fact, particular improvements in insulin levels occur, both in normal mice and in ob/ob mice, with weight loss, reduction in the abdominal fat content and major effects on cholesterolaemia, less on triglyceridaemia.

In particular, the study and design of a nutraceutical compound having the above three components made it possible to obtain a compound with considerable potential in reducing cholesterolaemia and lipidaemic parameters with a fairly good effect on body weight, less on food consumption, therefore highlighting a non-interference with the central nervous system.

In addition, as shown by the study in normal animals kept on a diet rich in fats and in ob/ob animals, modest drops in insulin, not in leptin, were recorded in CD-1 and ob/ob mice.

This shows that this particular combination with DNJ and HCA/B/VD allows an important metabolic result to be obtained with no significant interference with the endocrine system.

This result is of great significance in the treatment of hypercholesterolaemia and excess weight.

In addition, direct assessment of the product in a classic glucose absorption model in rats demonstrated a clear interference with the glycaemia rise, likely attributable to the increased tissue insulin sensitivity exerted by DNJ and probably also to a general glucose absorption barrier action. This mechanism well defines its potential in the treatment of both obesity and hyperglycaemic syndromes (type 2 diabetes mellitus).

A clinical study was also carried out to test the effects of this new compound in humans.

To this end, ten subjects with moderate dyslipidaemia/disglycaemia not requiring pharmacological treatment were enrolled and treated with the new preparation for twenty-eight days. The product was administered as two tablets a day providing 1,000 IU Vit.D3, 531 mg Berberine, 10 mg DNJ and 300 mg HCA. The table in Fig. 1 shows the changes obtained in the glycolipid profile.

Therefore, the new preparation has shown a remarkable effectiveness in reducing total cholesterol and LDL cholesterol, as well as triglycerides, by increasing the "good" cholesterol i.e. HDL cholesterol. At the same time, a remarkable reduction in blood glucose was obtained, thus confirming the properties of the new preparation. In conclusion, the association of these active components is of significant interest in clinical application as a support therapy for a low-calorie diet and with possible active components, such as: high vegetable fibres, leguminous proteins or other components that have been shown to be active in the treatment of hyperlipidaemia, dysglycaemia and obesity.

Another advantage is given by the particular relationship between its components, i.e. 1-deoxynojirimycin, Vitamin D3, Berberine and HCA, which, as is apparent from the above study, allows a particularly effective action.

The ability to regulate absorption and lipid metabolism, due to DNJ and Berberine combined with HCA, and the ability to control body weight and glycaemic metabolism, particularly due to 1-deoxynojirimycin, make it possible to intervene, in a particularly balanced manner, in virtually all the indices determining an increase in lipidaemia and body weight and hence the basis of a potential increased risk of arteriosclerosis.

A further advantage, clearly evident during the trial, is that the three nutraceutical compounds, due to the particular combination and mixture ratio thereof, do not cause substantial imbalances in the diet (consumption of food/water is not markedly altered), leading to the conclusion that the patient would not be induced to adopt an unbalanced diet.

Therefore, the nutraceutical compound is easily adaptable to any type of diet without causing dangerous side effects.

The invention is susceptible of variations falling within the scope of the inventive concept as defined by the claims.

In this context, all details are replaceable by equivalent elements and the materials, shapes and dimensions may be any materials, shapes and dimensions.

## Claims

1. A nutraceutical compound for the treatment of excess of weight and moderate hypercholesterolemia and disglicemia, **characterised in that** it comprises 1-deoxynojirimycin, Berberine, Hydroxycitric Acid and Vitamin D3.

2. The nutraceutical compound according to claim 1, exclusively comprising said 1-deoxynojirimycin, Berberine, Hydroxycitric Acid and Vitamin D3.

3. The nutraceutical compound according to one or more of the preceding claims, wherein Berberine is present in the compound in quantities comprised between 50-60 times the quantity of 1-deoxynojirimycin.

4. The nutraceutical compound according to one or more of the preceding claims, wherein hydroxycitric acid is present in the compound in quantities comprised between 25-35 times the quantity of 1-deoxynojirimycin.

5. The nutraceutical compound according to one or more of the preceding claims, wherein Vitamin D3 is present in the compound in quantities comprised between 0.1% and 0.4% the quantity of 1-deoxynojirimycin.

6. The nutraceutical compound according to one or more of the preceding claims, wherein said 1-deoxynojirimycin is present in a dose equal to 10 mg/day.

7. The nutraceutical compound according to one or more of the preceding claims, wherein said 1-deoxynojirimycin is a dry extract of Morus alba leaves.

8. The nutraceutical compound according to one or more of the preceding claims, wherein said Berberine is obtained as an extract from Berberis aristata bark.

9. The nutraceutical compound according to one or more of the preceding claims, wherein said hydroxycitric acid is obtained from the skin of Garcinia Cambogia fruits.

10. The nutraceutical compound according to one or more of the preceding claims, comprising Morus alba at doses comprised between 400 mg/day and 700 mg/day.
